Europäisches Patentamt

European Patent Office

Office européen des brevets

(11) Publication number: **0 240 218**
A1

(12) **EUROPEAN PATENT APPLICATION**

(21) Application number: 87302453.3

(22) Date of filing: 23.03.87

(51) Int. Cl.⁴: **B23B 31/40**

(30) Priority: 25.03.86 JP 66811/86

(43) Date of publication of application:
07.10.87 Bulletin 87/41

(84) Designated Contracting States:
CH DE FR GB IT LI SE

(71) Applicant: THINK LABORATORY CO., LTD.
610-1, Toyofuta-aza-umebayashi
Kashiwa-shi Chiba-ken 277(JP)

(72) Inventor: Takakura, Kohichi
101-324, 1-gou Tyoshikidai 4 Cyome
Kashiwa-shi Chiba-ken 277(JP)

(74) Representative: Thomson, Paul Anthony et al
Potts, Kerr & Co. 15, Hamilton Square
Birkenhead Merseyside L41 6BR(GB)

(54) Method for supporting a pipe.

(57) A method for supporting a pipe (P), characterized in that: elastic rings (1) and rigid rings (2) are
alternately loosely inserted into a straight pipe (P)
along an inner surface thereof, said straight pipe (P)
being the object to be supported; into both of said
elastic rings (1) and said rigid rings (2) is inserted a
supporting element (3) having a cylindrical outer
surface which abuts on inner surfaces of both of said
elastic rings (1) and said rigid rings (2) to support
both of said elastic rings (1) and said rigid rings (2)
thereon; and both of said elastic rings (1) and said
rigid rings (2) are compressed in an axial direction of
said supporting element (3) to cause said elastic
rings (1) to be deformed in cross-section, so that
said inner surface of said straight pipe (P) is integrally fixed to said cylindrical outer surfaces of said
supporting element (3).

EP 0 240 218 A1

*FIG.1*

## METHOD FOR SUPPORTING A PIPE

The present invention relates to a method for supporting a pipe such as a straight pipe, a photosensitive drum employed in a laser printer or an electrostatic copier, and a sleeve-type printing roller employed in a laser plotter for exposure-use or a rotary-press printing machine. Such method enables a pipe to be firmly and precisely supported on its inner surface so that deformation of the pipe is completely prevented when the pipe is subjected to an external force and a rotational effect applied to the pipe such as the straight pipe, photosensitive drum and the sleeve-type printing roller in case that, for example, an outer surface of the straight pipe is subjected to machine work, surface treatment or etching treatment while supported, or in case that the photosensitive drum is supported in the laser printer or the electrostatic copier, or in case that the sleeve-type printing roller is supported in the laser plotter for exposure-use or in the rotary-press printing machine.

In the case of the photosensitive drum employed in a laser printer or employed in an electrostatic copier, its constituent element is sleeve pipe having a precisely finished outer surface. Flanges, which are integrally connected to a shaft which is rotatably driven, are fixed to opposite ends of such photosensitive drum. In the case of the printing roller employed in a rotary-press printing machine, its constituent element is also such a sleeve pipe having a precisely finished outer surface. In Japan, a sleeve-type roller is employed as such printing roller, in which sleeve-type roller flanges are welded to opposite ends of the roller, such flanges being provided with chucking bores in which chucks are inserted through which the roller is rotatably driven. On the other hand,, in Europe and America, flanges are fixed to opposite ends of the roller which is integrally connected with a shaft which is rotatably driven. In any of the above cases, the sleeve pipe or roller has a thick wall, and both the flanges and the shaft are fixed to the opposite ends of such sleeve pipe. Consequently, since the sleeve pipe is not separately formed, the manufacturing cost of such sleeve pipe, integrally provided with both the flanges and the shaft, is very high.

In machining work of a cylindrical outer surface of a workpiece by means of machine tools such as a lathe and the like, the workpiece is held at its opposite ends by means of a rotary chuck and a tail stock of the machine tool in general. In this case, as a wall thickness of such sleeve pipe becomes thinner or a length of such sleeve pipe becomes longer, there tends to be a cross-sectional deformation or a torsional deformation of the sleeve pipe under the influences of an external pressure caused by a cutting load, so that there are limits on the sleeve pipe in respect of wall thickness and length. In addition, in use, both the photosensitive drum and the printing roller are subjected to a printing pressure. Particularly, since the printing roller is subjected to a printing pressure which is far larger in strength than the cutting load, the printing roller must be provided with a thick wall which results in a large weight which makes handling work of such printing roller very difficult. In addition, in order to reduce the manufacturing cost, such printing roller is repeatedly subjected to a Ballade plating in use.

In view of the above, there is a strong demande for a method for producing a completely straight pipe with a thin wall to enable the manufacturing costs to be drastically reduced and also to make the handling work easy, and further to enable the thus produced straight pipe to be utilised as a throwaway product, whereby it is possible to avoid having to use a roller having a non-straight pipe shape and a large wall thickness as such photosenstive drum and printing roller and thereby permit an economical improvement to be achieved.

In order to accomplish the above economical improvement, it is necessary to provide a method for supporting a completely straight pipe with a thin wall firmly at its inner surface. However, such a method has hitherto not been realized.

Incidentally, in one conventional method for supporting a pipe, a supporting element inserted into the pipe is provided with a plurality of chuck nails which are expandable in the radial directions of the pipe and are provided at predetermined intervals in the axial direction of the pipe. A rod is inserted into such supporting element and moved either in a sliding manner or in a rotating manner therein, so that the chuck nails of the supporting element are radially expanded to make it possible for the pipe to be supported at a large number of supporting points disposed along the inner surface of the pipe.

However, such conventional method employs a supporting apparatus having a complicated construction. In addition, in such apparatus, the chucking force for supporting the sleeve pipe at its large number of supporting points becomes smaller as the wall thickness of the sleeve pipe becomes thinner, which makes it impossible to employ a sleeve pipe having a very thin wall thickness, and, therefore, such conventional method cannot realise a practical supporting method for a sleeve pipe having a thin wall thickness employed, for example, as the photosensitive drum or the printing roller.

Further, in another conventional method for supporting a straight pipe having a thin wall thickness, the straight pipe is closed and supported at its opposite ends while being supplied with a highly-compressed air to produce an internal pressure inside the straight pipe, so that such internal pressure resists the external force. However, such conventional method requires a highly-compressed air generating apparatus and takes much time in charging/discharging of the highly-compressed air to make mounting of chucks of the stright pipe cumbersome. In addition, since substantial reliability is required in the sealing construction of an apparatus for supporting the straight pipe according to such conventional method, such leads to an increase in the manufacturing cost whilst such sealing construction does not substantially contribute to prevention of torsional deformation of the straight pipe.

The present invention is made in consideration of the above problems, and enables the pipe to be firmly, speedily and easily supported, and more particularly enables the pipe to be firmly supported at the entire area of its inner surface without causing any cross-sectional deformation or torsional deformation produced under the respective influence of an external force or a rotational effect, even when the wall thickness of the pipe is extremely thin, so that the present invention enables a completely straight pipe having a thin wall thickness to be produced at a very low manufacturing cost.

According to the present invention there is provided a method for supporting a pipe, characterized in that: elastic rings and rigid rings are alternately loosely inserted into a straight pipe along an inner surface thereof, said straight pipe being the object to be supported; into both of said elastic rings and said rigid rings is inserted a supporting element having a cylindrical outer surface which abuts on inner surfaces of both of said elastic rings and said rigid rings to support both of said elastic rings and said rigid rings thereon; and both of said elastic rings and said rigid rings are compressed in an axial direction of said supporting element to cause said elastic rings to be deformed in cross-section, so that said inner surface of said straight pipe is integrally fixed to said cylindrical outer surface of said supporting element.

Also according to the present invention there is provided a method for supporting a pipe, characterized in that: a plurality of rigid rings inserted into elastic rings are loosely inserted into a straight pipe along an inner surface thereof, said straight pipe being the object to be supported; into said rigid rings is inserted a supporting element having a cylindrical outer surface which abuts on inner surfaces of said rigid rings to support said rigid rings thereon, means for enabling said rigid rings to be axially slidable but not rotatably connected with said supporting element, said elastic rings being spaced apart from each other by an outer peripheral portion of each of said rigid rings; and said rigid rings being compressed in an axial direction of said supporting element make said elastic rings be deformed in cross-section, so that said rigid rings are integrally fixed to said inner surface of said straight pipe.

In the latter embodiment the means for enabling said rigid rings to be axially slidable but not rotatably connected to said supporting elements, comprises a key or spline.

In either of the above embodiments of the present invention, the supporting element is provided with a large-diameter portion at one end, a shoulder portion of which large-diameter portion of the supporting element abuts against the elastic ring or the rigid ring, into which ring is inserted the supporting element from the other end thereof, so that the elastic rings and the rigid rings are compressed in an axial direction of the supporting element under the influence of an external force applied to these rings from the other end of the supporting element. Locking of the rings may be conducted separately or at the same time as mounting of the straight pipe on chucks.

The present invention will be further illustrated, by way of example, with reference to the accompanying drawings, in which:

Fig. 1 is a sectional view of a first example of a method for supporting a pipe according to a first embodiment of the present invention;

Figs. 2 (a) and 2 (b) are enlarged views of the essential part of the embodiment illustrated in Fig. 1;

Figs. 3 (a) and 3 (b) are enlarged views of the essential part of a method for supporting a pipe according to a second embodiment of the present invention;

Fig. 4 is an enlarged view of the essential part of the embodiment illustrated in Figs. 3 (a), and 3 (b) wherein the straight pipe is replaced by one of larger diameter;

Fig. 5 is a sectional view of a second example of the method for supporting the pipe according to the first embodiment of the present invention, and

Fig. 6 is a sectional view of a third example of the method for supporting the pipe according to the first embodiment of the present invention.

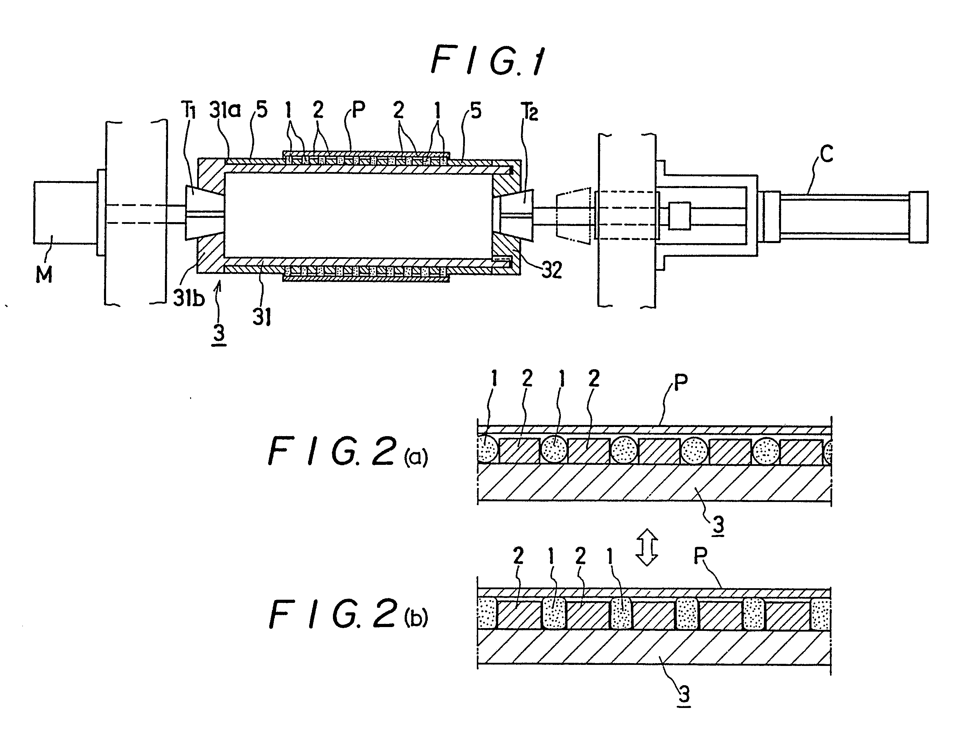

Fig. 1 shows a first embodiment of a method for supporting a straight pipe in accordance with the present invention. Fig. 1 is a sectional view of a straight pipe P having a thin wall thickness, which pipe P is employed as a printing roller of a machine tool or rotary-press printing machine, for illustrating a method for supporting such straight pipe P. Figs. 2 (a), 2(b) are enlarged views of a part of the first embodiment of the present invention.

The supporting element or member 3 comprises a main body 31 and a lid flange 32, which main body 31 has a sleeve-like shape having a large-diameter portion at its one end, the outer diameter of such largediameter portion is substantially the same in size as that of rigid rings 2 so that the large-diameter portion of the supporting element 3 forms a ring-receiving shoulder portion 31a and a fixed flange 31b at one end thereof, which supporting element 3 is inserted into both elastic rings 1 and rigid rings 2 from the other end of the supporting element 3. Thus the elastic rings 1, rigid rings 2 and an adjusting ring 5 are mounted on the outer peripheral surface of the supporting element 3 in an insertion-like manner. Further a straight pipe P is mounted on the outer peripheral surfaces of the rings 1,2 and 5 in an insertion-like manner. After such mounting of the straight pipe P, the lid flange 32 is mounted on the other end of the supporting element 3. The supporting element 3 is then mounted on chucks at its fixed flange 31b and lid flange 32 by means of a driving chuck T₁ and a free chuck T₂, respectively. The driving chuck T₁ is rotatably driven by a motor M while the free chuck T₂ is stroked back and forth by a cylinder C. Thereafter, the lid flange 32 compresses both of the elastic rings 1 and the rigid rings 2 provide inside the straight pipe P, through the adjusting ring 5, to cause the elastic rings 1 to be radially inwardly and outwardly deformed in their cross section so that the cylindrical outer surface of the supporting element 3 is integrally fixed to the inner surface of the straight pipe P.

When both the elastic rings 1 and the rigid rings 2 are compressed in the axial direction of the supporting element 3, the elastic rings 1 are subjected to axially compressive forces exerted by the side surfaces of the rigid rings 2 and are deformed radially outwardly and inwardly in their cross section to be brought into close contacts with both the outer surfaces of the supporting element 3 and the inner surface of the straight pipe P, so that the inner surface of the straight pipe P is coaxially supported with the cylindrical outer surface of the supporting element 3. At the same time, since the elastic rings 1 are brought into close contact with the rigid rings 2, the elastic rings 1 are prevented from being displaced in the circumferential direction to ensure a firm holding of the straight pipe P. By increasing the numbers of both the elastic rings 1 and the rigid rings 2, it is possible to hold the straight pipe in a firmer manner. The elastic rings 1 may heve other shapes in cross section in addition to the circular shapes shown in the drawings. In the case in which the elastic rings 1 are rings which have rectangular cross sectional shapes, the rings 1 have a thin wall thickness and are made of urethane rubber. It is possible to increase the resistance of such elastic rings 1 against an external pressure to ensure a further firmer and precise holding or supporting of the straight pipe P. The numbers of both the elastic rings 1 and the rigid rings 2 are so adjusted that both the elastic rings 1 and the rigid rings 2 are disposed inside the straight pipe P, according to the length of the straight pipe P. Adjusting rings 5, which are the same in both inner and outer diameter as the rigid rings 2, are mounted outside the straight pipe P in an insertion-like manner, so that such adjusting rings 5 are prevented from interfering with treatment and printing operations of the straight pipe P.

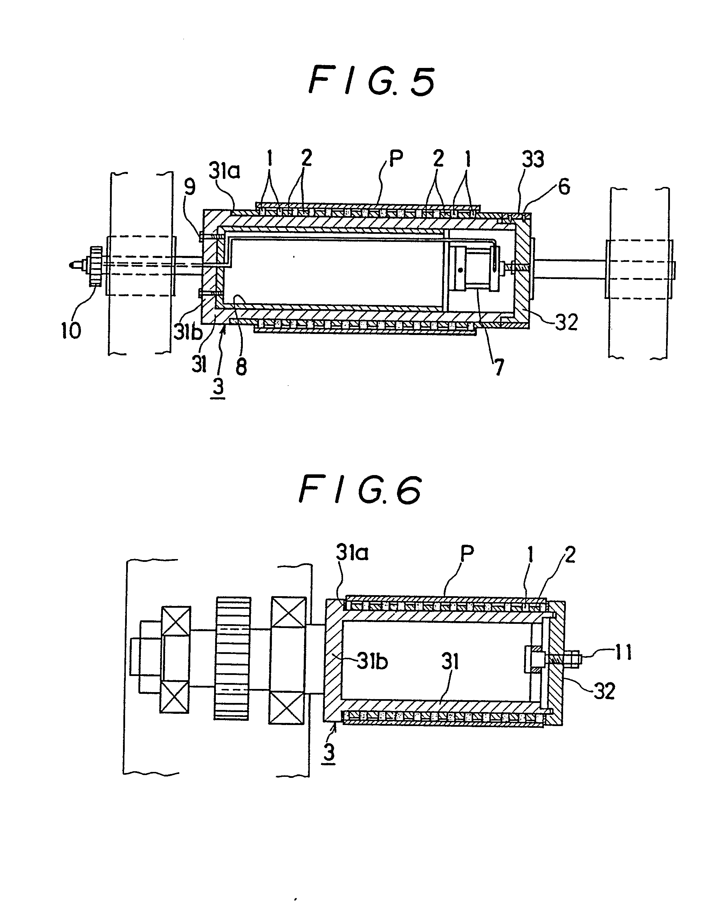

Fig. 5 is a sectional view of a second embodiment of a method for supporting a pipe in accordance with the present invention. In such method, a straight pipe P having a thin wall thickness and employed in a machine tool or in a rotary-press printing machine is supported through the supporting element 3 provided with rotary shafts at its opposite ends.

The supporting element 3 is a double-shaft type element comprising a main body 31 and a lid flange 32, which main body 31 has a sleeve-like shape having the large-diameter portion at its one end, the outer diameter of which large-diameter portion is substantially the same in size as that of a rigid ring 2 so that the large-diameter portion of the supporting element 3 forms the ring-receiving shoulder portion 31a and the fixed flange 31b provided with a shaft at its one end, the other end portion of which supporting element 3 forms an insertion end portions inserted into both the elastic rings 1 and the rigid rings 2. The elastic rings 1 and the rigid rings 2 are alternately mounted on the outer peripheral surface of the supporting element 3 in an insertion-like manner. The straight pipe P is mounted on the outer peripheral surfaces of the elastic rings 1 and the rigid rings 2 in an insertion-like manner. After mounting of the straight pipe P, the lid flange 32 provided with a shaft is inserted into a single-slit ring 33 and fixed thereto by means of bolts 6. Thereafter, a cylinder 7 provided inside the main body 31 of the supporting element 3 is supplied with highly-compressed air through the shaft end of the main body 31 so as to be actuated, whereby the lid flange 32 is pulled so as to be assembled with the supporting element 3, whereby both the elastic rings 1 and the rigid rings 2 are compressed in the axial direction of the supporting element 3. As a result, the elastic rings 1 are deformed in cross-section to cause the cylindrical outer surface of the supporting element 3 to be integrally fixed to the inner surface of the straight pipe P. Thereafter, the shafts provided at the opposite ends of the supporting element 3 are supported by bearings of a machine tool or rotary-press printing machine. Incidentally, in order to provide the cylinder 7 in the vicinity of the lid flange 32, a tubular connecting element 8 is inserted into the main body 31 of the supporting element 3 and fixed thereto by bolts 9. The reference numeral 10 denotes a gear engaged with a driving source.

Fig. 6 is a sectional view of a third embodiment of a method for supporting a pipe of the present invention, which is utilised for supporting a straight pipe having a thin wall thickness employed as a very short printing roller of a rotary-press printing machine for light-printing use.

The supporting element 3 is a cantilever-type element constructed of the main body 31 and the lid flange 32, which main body 31 has a large-diameter portion forming the ring-receiving shoulder portion 31a at its one end, the outer diameter of which large-diameter portion is larger than that of the rigid ring 2 while smaller than that of the straight pipe P. In addition the large-diameter portion of the main body 31 is provided with the fixed flange 31b having a shaft at one end. The other end of the main body 31 forms a portion inserted into both the elastic rings 1 and the rigid rings 2. A fastening bolt 11 is provided in such main body 31. The elastic rings 1 and the rigid rings 2 are alternately mounted on the main body 31 in an insertion-like manner from the other end thereof, and after that the straight pipe P is mounted on these rings 1, 2 in an insertion-like manner, the lid flange 32 is then fastened to the main body 31 so as to horizontally support the straight pipe P. Where the straight pipe P is employed as the printing roller and varies in diameter, only replacement of the straight pipe P is required.

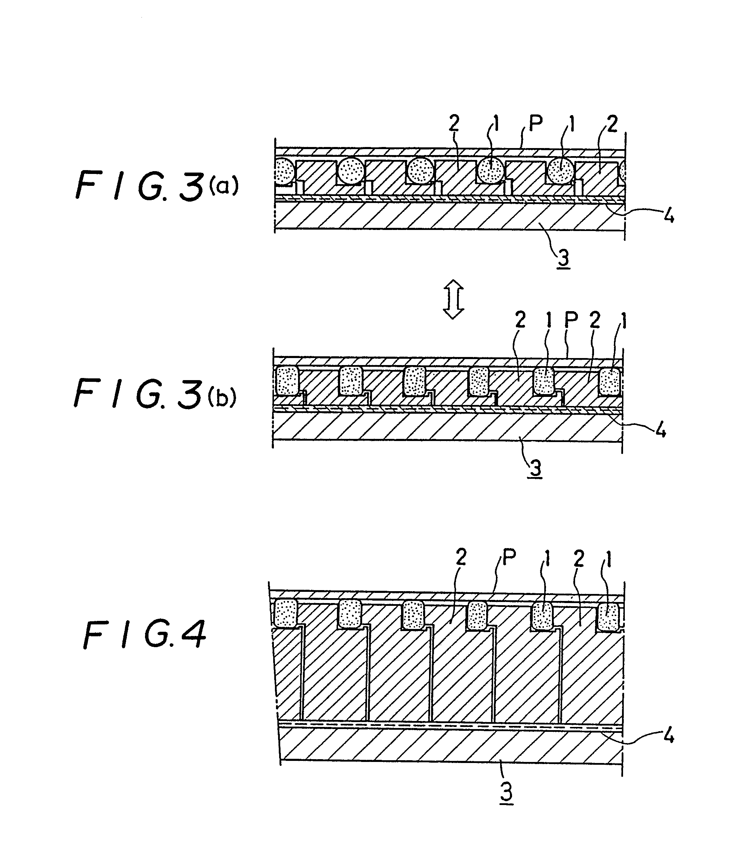

Figs. 3 (a) and 3 (b) are partially enlarged views of a first example of the second embodiment of the method for supporting a pipe according to the present invention.

A key 4 is provided in an outer surface of the supporting element through which a plurality of stepped rigid rings 2 having two different diameter portions are so connected with the supporting element 3 that the rings 2 are rotatable together with the supporting element 3 in an integral manner. The elastic ring 1 is forcibly mounted on a small-diameter portion 2a of each of the rigid rings 2 so that the elastic rings 1 are disposed between large-diameter portions 2b of the rigid rings 2. The straight pipe P is then mounted on the outer peripheral surfaces of the elastic rings 1 in an insertion-like manner. By urging the rigid rings 2 in the axial direction of the supporting element 3, the elastic rings 1 are deformed in cross-section so as to be expanded radially outwardly, so that the elastic rings 1 urge the inner surface of the straight pipe P to cause same to be integrally fixed to the supporting element 3.

Incidentally, engagement between the supporting element 3 and the rigid rings 2 may be established by other suitable means than the key 4. For example, a spline or like suitable means which permit the rigid rings 2 to slide on the supporting element 3 along its axial direction while inhibiting a relative rotation of the rigid rings 2 with respect to the supporting element 3, may be utilised.

Fig. 4 is a partially enlarged view of an essential part of the embodiment shown in Fig. 3 of the method of the present invention, in case that the straight pipe P is replaced with one having a larger diameter.

In the second embodiment of the present invention, since the elastic rings 1 are mounted on the rigid rings 2 in an insertion-like manner while the rigid rings 2 are engaged with the supporting element 3 through the key 4 or spline means, only replacements of both the rigid rings 2 and the elastic rings 1 suffice even when the straight pipe P being supported varies considerably in its inner diameter. In this case, when the elastic rings 1 are previously mounted on the rigid rings 2 in an insertion-like manner, substantially only the replacement of the rigid rings 2 suffices to make such replacement be speedily conducted. In addition, in case the gaps between the rigid rings 2 are determined to be small, it is possible to compress any of the elastic rings 1 at maximum ratio and in a uniform manner by urging the rigid rings 2 from the other end of the main body 31 of the supporting element 3, which is effective in supporting the straight pipe P with a thin wall thickness.

Incidentally, although the supporting element 3 constitutes a base member for supporting the straight pipe P when employed as the photosensitive drum or the printing roller, it is not necessarily required to be rotatably driven in construction, because there is a case in which the supporting element 3 is held stationary while a cutter of the machine tool is rotatably driven around such stationary supporting element 3 in addition to the case of the rotary-press printing machine in which the supporting element 3 is provided to be rotatably driven without exception.

Further, the method for supporting the straight pipe P of the present invention may be employed in supporting a straight pipe P having a thick wall thickness in addition to a straight pipe P having a thin wall thickness. Further, the method of the present invention may be advantageously employed in supporting various kinds of pipes and roller to be replaced.

As described in the above, any of the first and second embodiments of the method for supporting the straight pipe P according to the present invention has a construction in which:

a pipe supporting means is constructed by alternately mounting on the supporting element having a cylindrical outer surface of plurality of elastic rings and a plurality of rigid rings in an insertion-like manner or by mounting on such cylindrical outer surface of the supporting element a plurality of the rigid rings in an insertion-like manner, on which rigid rings are mounted in an insertion-like manner a plurality of the elastic rings; on such pipe supporting means is mounted the straight pipe in an insertion-like manner, which straight pipe is the object to be supported; and thereafter, both the elastic rings and the rigid rings are compressed to cause the elastic rings to be deformed in cross-section so as to be radially expanded outwardly and inwardly, whereby the straight pipe is supported at its inner surface by the plurality of the elastic rings thus expanded.

As described above, the method of the present invention permits a straight pipe to be firmly supported over the entire area of its inner surface even when such pipe has a thin wall thickness, without any cross-sectional deformation or torsional deformation of such straight pipe being produced under the influences of an external force and the rotational effect of the straight pipe. In addition, the method of the present invention also permits the straight pipe to be firmly supported by simply urging the outermost rigid ring, which enables the replacement of the straight pipe to be speedily and easily conducted.

As described above, the method of the present invention permits both the photosensitive drum and the printing roller to be constructed of straight pipes having thin wall thicknesses, and permits such straight pipe to be employed in various instruments to lead to a drastic reduction of the manufacturing cost of the conventional pipe product such as the photosensitive drum and the printing roller whereby it is possible to employ the photosenstive drum and the printing roller in a throwaway-use manner, which realises a large economic improvement.

It is possible to produce a straight pipe employed as the photosenstive drum or the printing roller by directly applying an accurate-abrasive finishing treatment to an outer surface of a portion of a straight pipe, such as a drawn steel pipe or a precision plastic pipe, being very precise in concentricity and roundness of its inner and outer surfaces, which portion is produced by precisely cutting such precision straight pipe so as to obtain a necessary length of the portion of the straight pipe, which finishing treatment is conducted while such portion of the straight pipe is supported at its inner surface. According to the method of the present invention, it is possible to apply any necessary surface treatment such as plating, photosensitive film coating and the like to an outer surface of the straight pipe so as to produce the photosensitive drum, printing roller or the like products, whereby a large economic improvement is achieved by the method of the present invention.

Further, in the method for supporting the straight pipe according to the first and second embodiments of the present invention, with regard to the supporting means itself, the elastic rings may be constructed of O-rings made of silicone rubber. On the other hand, the rigid rings may be constructed of portions of a circular sleeve-like pipe, which portions are produced by cutting the circular sleeve-like pipe in a radial direction thereof at predetermined axial intervals therealong by means of a lathe, which sleeve-like pipe has predetermined inner and outer diameters, according to the method for supporting the pipe of the first embodiment of the present invention. The same method as that of the above may be also applied to production of the rigid rings employed in the method for supporting the pipe of the second embodiment of the present invention to lead to reduction of the manufacturing cost thereof. In any of the above embodiments of the present invention, it is possible to produce both the elastic rings and the rigid rings at a lower manufacturing cost than that of the conventional products, which enables the user to purchase both the elastic rings and the rigid rings employed in the method of the present invention at a lower expense than that of conventional products. This is also true as to the supporting element employed in the method of the present invention. Even in the embodiment of the method of the present invention in which a cylinder is employed, an apparatus for working the method of the present invention may be produced at a lower manufacturing cost than that of the conventional apparatus. This is one of the effects of the method of the present invention.

In any of the above embodiments of the method of the present invention, since the supporting means constructed of the supporting element, elastic rings and the rigid rings has a flexibility in length as to the length of the straight pipe being supported, it is possible to drastically reduce the manufacturing cost of such supporting means in addition to the drastic reduction of the manufacturing cost of the straight pipe employed as the photosensitive drum or the printing roller as compared to the cost of conventional supporting means.

On the other hand, when considered from another viewpoint, in various kinds of cylindrical machining treatments conducted by the machine tools, the method of the present invention realises a precise cylindrical machining work of an outer surface of any of various kinds of pipes having thin wall thicknesses or thick wall thicknesses in addition to those employed as the photosensitive drum and the printing roller, and thereby leading to realization of any of a rotary-press printing machine, a laser plotter for exposure-use, a laser printer or an electrostatic copier, in any of which a printing roller with a thin wall thickness or a photosensitive drum with a thin wall thickness is employed.

## Claims

1. A method for supporting a pipe (P), characterized in that: elastic rings (1) and rigid rings (2) are alternately loosely inserted into a straight pipe (P) along an inner surface thereof, said straight pipe (P) being the object to be supported; into both of said elastic rings (1) and said rigid rings (2) is inserted a supporting element (3) having a cylindrical outer surface which abuts on inner surfaces of both of said elastic rings (1) and said rigid rings (2) to support both of said elastic rings (1) and said rigid rings (2) thereon; and both of said elastic rings (1) and said rigid rings (2) are compressed in an axial direction of said supporting element (3) to cause said elastic rings (1) to be deformed in cross-section, so that said inner surface of said straight pipe (P) is integrally fixed to said cylindrical outer surface of said supporting element (3).

2. A method for supporting a pipe (P), characterized in that: a plurality of rigid rings (2) inserted into elastic rings (1) are loosely inserted into a straight pipe (P) along an inner surface thereof, said straight pipe (P) being the object to be supported; into said rigid rings (2) is inserted a supporting element (3) having a cylindrical outer surface which abuts on inner surfaces of said rigid rings (2) to support said rigid rings (2) thereon, means for enabling said rigid rings (2) to be axially slidable but not rotatably connected with said supporting element (3), said elastic rings (1) being spaced apart from each other by an outer peripheral portion of each of said rigid rings (2); and said rigid rings (2) being compressed in an axial direction of said supporting element (3) make said elastic rings (1) be deformed in cross-section, so that said rigid rings (2) are integrally fixed to said inner surface of said straight pipe (P).

3. A method for supporting a pipe as claimed in claim 2, characterized in that the means for enabling said rigid rings (2) to be axially slidable but not rotatably connected to said supporting element (3) comprises a key (4) or spline.

4. A method for supporting a pipe as claimed in any preceding claim, characterised in that the supporting element (3), is provided with a large-diameter protion at one end, a shoulder portion of which large-diameter portion of the supporting elements (3) abuts against the elastic rings (1) or the rigid ring (2), into which ring (1 or 2) is inserted the supporting element (3) from the other end thereof, so that the elastic rings (1) and the rigid rings (2) are compressed in an axial direction of the supporting elements (3) under the influence of an external force applied to these rings (1 and 2) from the other end of the supporting element (3).

5. A method for supporting a pipe as claimed in any preceding claim, characterized in that locking of the rings (1, 2) is conducted separately or at the same time as mounting of the straight pipe (P) on chucks.

6. A method for supporting a pipe as claimed in any preceding claim, characterised in that the elastic rings (1) are constructed of O-rings made of silicone rubber.

7. A method for supporting a pipe, characterized in that the rigid rings are constructed of portions of a ciruclar sleeve-like pipe, which pipe has predetermined inner and outer diameters.

# F I G . 1

0 240 218

# F I G . 2 (a)

# F I G . 2 (b)

F I G. 3 (a)

F I G. 3 (b)

F I G. 4

# FIG. 5

# FIG. 6

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | DE-A-2 262 159 (GERBER AG) * page 2, line 15 - page 3, line 12; claims 1, 2; figure 1 * | 1 | B 23 B 31/40 |
| A | | 2,4-7 | |
| A | US-A-2 734 749 (BENJAMIN) * figure 3; column 2, lines 11-34 * | 1-3 | |
| A | DE-A-1 943 325 (LINK) * figure 5 * | 1 | |
| A | US-A-3 073 610 (MACKINDER et al.) * figures 1, 3, 4; column 2, line 59 - column 3, line 14 * | 1,6 | |
| A | US-A-2 573 928 (PETER) * figures 1, 6 * | 1 | TECHNICAL FIELDS SEARCHED (Int. Cl.4) B 23 B 31/00 F 16 L 9/00 |

The present search report has been drawn up for all claims

| Place of search | Date of completion of the search | Examiner |
|---|---|---|
| BERLIN | 22-06-1987 | SCHAEFFLER C.A.A. |